# EUROPEAN PATENT SPECIFICATION

(11) **EP 3 558 636 B1**
(45) Date of publication and mention of the grant of the patent: **28.12.2022**
(21) Application number: 17883128.5
(22) Date of filing: 06.11.2017
(51) Int. Cl.: B22F 10/28, B22F 10/322, B22F 10/366, B22F 10/80, B22F 12/70, B22F 12/90, B23K 26/03, B23K 26/06, B23K 26/082, B23K 26/12, B23K 26/16, B23K 26/342, B29C 64/153, B29C 64/268, B29C 64/371, B29C 64/393, B33Y 10/00, B33Y 50/02

(54) **METHOD FOR CONTROLLING PLUME TRAJECTORIES IN ADDITIVE MANUFACTURING**
VERFAHREN ZUR KONTROLLE DER RAUCHFAHNENFLUGBAHNEN IN DER GENERATIVEN HERSTELLUNG
PROCÉDÉ DE CONTRÔLE DE TRAJECTOIRES DE PANACHE DANS LA FABRICATION ADDITIVE

(30) Priority: 23.12.2016 US 201615390055
(43) Date of publication of application: 30.10.2019
(73) Proprietor: General Electric Company, Schenectady, NY 12345 (US)
(72) Inventor: MARTIN, Andrew, J., Blue Ash, OH 45241 (US); REDDING, MacKenzie, Ryan, Cincinnati, OH 45241 (US); MAMRAK, Justin, 96052 Bamberg (DE)
(74) Representative: Hafner & Kohl PartmbB
(86) International application number: PCT/US2017/060130
(87) International publication number: WO 2018/118232

(56) References cited:
- EP-A1- 3 050 666
- DE-A1-102013 205 724
- DE-A1-102014 212 100
- DE-A1-102014 217 786
- DE-A1-102015 207 254
- KR-A- 20160 092 503
- US-A1- 2014 301 883
- US-A1- 2015 321 422
- US-A1- 2016 008 922
- US-A1- 2016 136 731
- US-B2- 9 353 229
- DR. KAMRAN AAMIR MUMTAZ ET AL: "SELECTIVE LASER MELTING OF INCONEL 625 USING PULSE SHAPING", RAPID PROTOTYPING JOURNAL, vol. 16, no. 4, 1 January 2010 (2010-01-01), pages 248-257, XP055158649, ISSN: 1355-2546, DOI: 10.1108/13552541080000463

## Description

### BACKGROUND OF THE INVENTION

This invention relates generally to additive manufacturing, and more particularly to methods for avoiding interference of an energy beam with an emissions plume in additive manufacturing.

Additive manufacturing is a process in which material is built up layer-by-layer to form a component. Additive manufacturing is also referred to by terms such as "layered manufacturing," "reverse machining," "direct metal laser melting" (DMLM), and "3-D printing". Such terms are treated as synonyms for purposes of the present invention.

One type of additive manufacturing machine is referred to as a "powder bed" machine and includes a build chamber that encloses a mass of powder which is selectively fused by a radiant energy beam to form a workpiece. The build chamber is enclosed in a housing that typically includes provisions for a flow of shielding gas therein. The shielding gas is used to transfer heat away from the surface of the powder bed, to prevent vaporized powder from condensing on the surface of the workpiece, and to control undesired chemical reactions, such as oxidation.

In operation, the interaction of the radiant energy beam with the powder causes vaporization of the powder, generating a plume which originates in the vicinity of the melt pool and travels downstream, entrained in the shielding gas flow. In the immediate vicinity of a melt pool generated by the energy beam, the composition of the plume is mostly vaporized powder. At downstream locations, the vapor cools and condenses so that the plume comprises a mixture of gas and metallic particles (condensate).

US 2016/136731 A1, EP 3 050 666 A1 and DE 10 2013 205724 A1 relate to powder bed based additive manufacturing methods comprising controlling the gas flow to avoid intersection of the energy beam with the generated fumes.

DE 10 2015 207254 A1 relates to a method of monitoring the presence of fumes generated in a powder bed fusion additive manufacturing apparatus.

One problem with the presence of the condensate is that it can have detrimental effects on the build process, for example blockage of the energy beam, or a reduction in beam intensity. This problem prevents rapid beam scanning or the use of multiple beams.

### BRIEF DESCRIPTION OF THE INVENTION

This problem is addressed by a method of using a model or a real-time understanding of the plume behavior and a controller to change the path of an emissions plume and optionally an energy beam being used in an additive manufacturing process, so that it prevents or avoids interactions between the beam and the plume.

According to one aspect of the invention described herein and covered by claim 1, a method is provided of controlling an additive manufacturing process in which one or more energy beams are used to selectively fuse a powder contained in a housing having a gas flow therein in order to form a workpiece, in the presence of one or more plumes generated by interaction of the one or more energy beams with the powder. The method includes controlling a trajectory of at least one the plumes by varying the magnitude or the direction of the gas flow, so as to prevent the one or more energy beams from intersecting the one or more plumes, wherein the method comprises: determining the trajectory of the one or more plumes by sensing or by modeling to quantify a behavior of the at least one of the plumes.

According to another aspect of the technology described herein, which is not covered by the claims, a method of making a workpiece includes: depositing a powdered material in a build chamber disposed in a housing, while using a gas flow apparatus coupled in fluid communication with the housing to provide a gas flow over the powder; in the presence of the gas flow, directing one or more energy beams to selectively fuse the powdered material in a pattern corresponding to a cross-sectional layer of the workpiece, wherein interaction of the one or more energy beams with the powdered material generates one or more plumes entrained in the gas flow; and selectively modifying the gas flow in order to control a trajectory of at least one of the plumes, so as to prevent the energy beams from intersecting the plumes.

### BRIEF DESCRIPTION OF THE DRAWINGS

The invention may be best understood by reference to the following description taken in conjunction with the accompanying drawing figures in which:
FIG. 1 is a schematic, partially-sectioned front elevation view of an exemplary additive manufacturing machine including a build chamber therein;
FIG. 2 is a schematic, partially-sectioned side elevation view of the machine of FIG. 1;
FIG. 3 is a schematic, partially-sectioned top plan view of the machine of FIG. 1;
FIG. 4 is a schematic perspective view of an additive manufacturing build chamber showing a build process using two energy beams, with each beam generating an emissions plume;
FIG. 5 is a schematic perspective view of an additive manufacturing build chamber showing a build process using two energy beams, with sensors positioned around the build chamber to detect plumes generated by the beams;
FIG. 6 is a schematic perspective view of an additive manufacturing build chamber showing a gas flow from inlet ducts being used to steer the path of an emissions plume; and
FIG. 7 is a schematic perspective view of an additive manufacturing build chamber showing a gas flow from inlet ducts being used to create a vortex flow pattern, and a suction device being used to remove emissions plumes from the chamber.

### DETAILED DESCRIPTION OF THE INVENTION

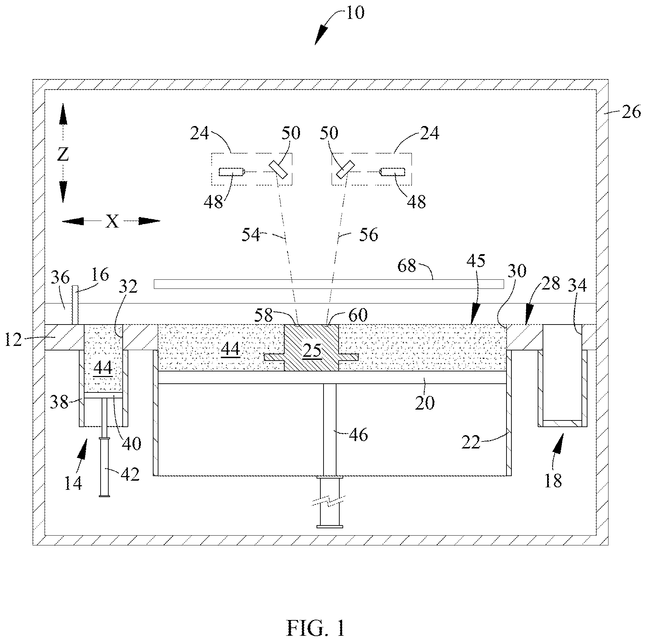

Referring to the drawings wherein identical reference numerals denote the same elements throughout the various views, FIG. 1 illustrates schematically an additive manufacturing machine 10 suitable for carrying out an additive manufacturing method. Basic components of the machine 10 include a table 12, a powder supply 14, a recoater 16, an overflow container 18, a build platform 20 surrounded by a build chamber 22, and at least one beam generator 24, all surrounded by a housing 26. Each of these components will be described in more detail below.

The table 12 is a rigid structure defining a planar worksurface 28. The worksurface 28 is coplanar with and defines a virtual workplane. In the illustrated example it includes a build opening 30 communicating with the build chamber 22 and exposing the build platform 20, a supply opening 32 communicating with the powder supply 14, and an overflow opening 34 communicating with the overflow container 18.

The recoater 16 is a rigid, laterally-elongated structure that lies on the worksurface 28. It is connected to an actuator 36 operable to selectively move the recoater 16 along the worksurface 28. The actuator 36 is depicted schematically in FIG. 1, with the understanding devices such as pneumatic or hydraulic cylinders, ballscrew or linear electric actuators, and so forth, may be used for this purpose.

The powder supply 14 comprises a supply container 38 underlying and communicating with the supply opening 32, and an elevator 40. The elevator 40 is a plate-like structure that is vertically slidable within the supply container 38. It is connected to an actuator 42 operable to selectively move the elevator 40 up or down. The actuator 42 is depicted schematically in FIG. 1, with the understanding that devices such as pneumatic or hydraulic cylinders, ballscrew or linear electric actuators, and so forth, may be used for this purpose. When the elevator 40 is lowered, a supply of powder 44 of a desired composition (for example, metallic, polymeric, ceramic, and/or organic powder) may be loaded into the supply container 38. When the elevator 40 is raised, it exposes the powder 44 above the worksurface 28. Other types of powder supplies may be used; for example powder may be dropped into the build chamber 22 by an overhead device (not shown).

The build platform 20 is a plate-like structure that is vertically slidable below the build opening 30. It is connected to an actuator 46 operable to selectively move the build platform 20 up or down. The actuator 46 is depicted schematically in FIG. 1, with the understanding that devices such as pneumatic or hydraulic cylinders, ballscrew or linear electric actuators, and so forth, may be used for this purpose. When the build platform 20 is lowered into the build chamber 22 during a build process, the build chamber 22 and the build platform 20 collectively surround and support a mass of powder 44 along with any components being built. This mass of powder is generally referred to as a "powder bed", and this specific category of additive manufacturing process may be referred to as a "powder bed process".

The overflow container 18 underlies and communicates with the overflow opening 34, and serves as a repository for excess powder 44.

The apparatus 10 incorporates at least one beam generator 24 operable to generate an energy beam and direct it as desired. As will be explained in more detail below, multiple beam generators 24 may be provided and used simultaneously in order to increase this production speed of the apparatus 10. In the illustrated example, two beam generators 24 are shown.

Each beam generator 24 includes a directed energy source 48 and a beam steering apparatus 50. The directed energy source 48 may comprise any device operable to generate a beam of suitable power and other operating characteristics to melt and fuse the powder 44 during the build process, described in more detail below. For example, the directed energy source 48 may be a laser. Other directed-energy sources such as electron beam guns are suitable alternatives to a laser.

The beam steering apparatus 50 may include one or more mirrors, prisms, and/or lenses and provided with suitable actuators, and arranged so that a beam from the directed energy source 48 can be focused to a desired spot size and steered to a desired position in plane coincident with the worksurface 28. For purposes of convenient description, this plane may be referred to as a X-Y plane, and a direction perpendicular to the X-Y plane is denoted as a Z-direction (X, Y, and Z being three mutually perpendicular directions). The beam may be referred to herein as a "build beam".

In the illustrated example, one of the beam generators 24 is operable to generate a first build beam 54, and the other of the beam generators 24 is operable to generate a second build beam 56.

An exemplary basic build process for a workpiece 25 using the apparatus described above is as follows. The build platform 20 is moved to an initial high position. The build platform 20 is lowered below the worksurface 28 by a selected layer increment. The layer increment affects the speed of the additive manufacturing process and the resolution of the workpiece 25. As an example, the layer increment maybe about 10 to 50 micrometers (0.0003 to 0.002 in.). Powder 44 is then deposited over the build platform 20 for example, the elevator 40 of the supply container 38 may be raised to push powder through the supply opening 32, exposing it above the worksurface 28. The recoater 16 is moved across the worksurface to spread the raised powder 44 horizontally over the build platform 20. Any excess powder 44 drops through the overflow opening 34 into the overflow container 18 as the recoater 16 passes from left to right. Subsequently, the recoater 16 may be moved back to a starting position. The leveled powder 44 may be referred to as a "build layer" and the exposed upper surface thereof may be referred to as a "build surface", designated 45.

One or more of the beam generators 24 are used to melt a two-dimensional cross-section or layer of the workpiece 25 being built. Within the beam generator 24, the directed energy source 48 emits a beam and the beam steering apparatus 50 is used to steer a focal spot of the build beam over the exposed powder surface in an appropriate pattern. A small portion of exposed layer of the powder 44 surrounding the focal spot, referred to herein as a "melt pool" is heated by the build beam to a temperature allowing it to sinter or melt, flow, and consolidate. This step may be referred to as "fusing" the powder 44. As an example, the melt pool may be on the order of 100 micrometers (0.004 in.) wide. In the illustrated example using two beam generators 24, the first build beam 54 generates a first melt pool 58 and the second build beam 56 generates a second melt pool 60.

The build platform 20 is moved vertically downward by the layer increment, and another layer of powder 44 is applied in a similar thickness. The beam generators 24 again emit build beams 54, 56 and the beam steering apparatus 50 is used to steer the focal spots of the build beams 54, 56 over the exposed powder surface in an appropriate pattern. The exposed layer of the powder 44 is heated by the build beams 54, 56 to a temperature allowing it to fuse as described above, and consolidate both within the top layer and with the lower, previously-solidified layer.

This cycle of moving the build platform 20, applying powder 44, and then directed energy fusing the powder 44 is repeated until the entire workpiece 25 is complete.

The machine 10 and its operation are as representative example of a "powder bed machine". It will be understood that the principles described here are applicable to other configurations of powder bed machines.

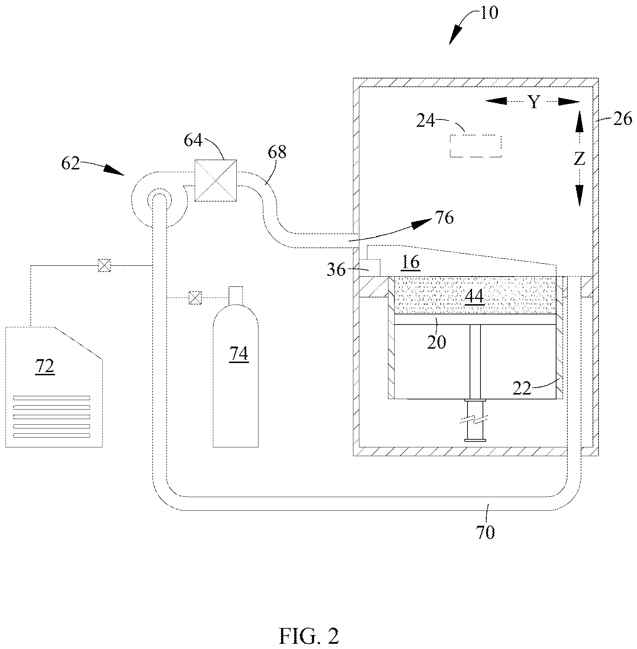

The housing 26 serves to isolate and protect the other components of the machine 10. During the build process described above, the housing 26 is provided with a flow of an appropriate shielding gas which, among other functions, excludes oxygen from the build environment. To provide this flow the machine 10 may be coupled to a gas flow apparatus 62, seen in FIG. 2. The exemplary gas flow apparatus 62 includes, in serial fluid flow communication, a variable-speed fan 64, a filter 66, an inlet duct 68 communicating with the housing 26, and a return duct 70 communicating with the housing 26. All of the components of the gas flow apparatus 62 are interconnected with suitable ducting and define a gas flow circuit in combination with the housing 26.

The composition of the gas used may similar to that used as shielding gas for conventional welding operations. For example, gases such as nitrogen, argon, or mixtures thereof may be used. Any convenient source of gas may be used. For example, if the gas is nitrogen, a conventional nitrogen generator 72 may be connected to the gas flow apparatus 62. Alternatively, the gas could be supplied using one or more pressurized cylinders 74.

Once the gas flow apparatus 62 and machine 10 are initially purged with gas, the fan 64 is used to recirculate the gas through the gas flow circuit in a substantially closed loop, so as to maintain the positive pressure described above, with additional added makeup gas added as needed. Increasing the fan speed increases the velocity and flow rate of gas in the gas flow circuit; conversely, decreasing the fan speed decreases the velocity and flow rate of gas in the gas flow circuit. As an alternative to recirculation, the gas flow apparatus 62 could operate in a total loss mode; for example instead of the gas flowing through the return duct 70 and back to the fan 64, it could simply be vented to atmosphere after passing over the build chamber 22. In the illustrated example, the thermal mass of the gas provides a heat transfer function, however an optional heat exchanger (not shown) could be incorporated into the gas flow apparatus 62.

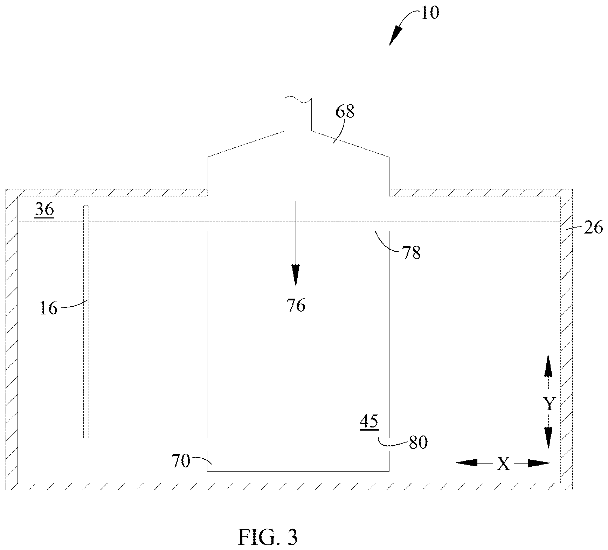

The inlet duct 68 is positioned near the bottom of the housing 26. During operation it provides a stream or flow of gas (see arrow 76). As seen in FIG. 1, the inlet duct 68 has an elongated shape (for example rectangular) and discharges gas across the width of the build chamber 22. For reference purposes the width of the build chamber 22 may be considered parallel to the "X" direction. As shown in FIG. 3, the edge of the build chamber 22 closest to the upper inlet duct 68 is referred to as a "leading edge" 78, and the opposite parallel edge is referred to as a "trailing edge" 80. For reference purposes the length of the build chamber (i.e. distance from leading edge 78 to trailing edge 80) may be considered parallel to the "Y" direction.

The gas flow 76 has two functions. First, it is used to effect heat transfer and carry heat away from the surface of the uppermost built layer within the build chamber 22. Second, during the build process, some of the powder 44 is vaporized. This vapor can cool and condense on the surface of the workpiece 25, in turn causing an undesirable surface roughness or "recast" layer. Part of the gas flow 76 is used to carry away the vapors and/or condensate.

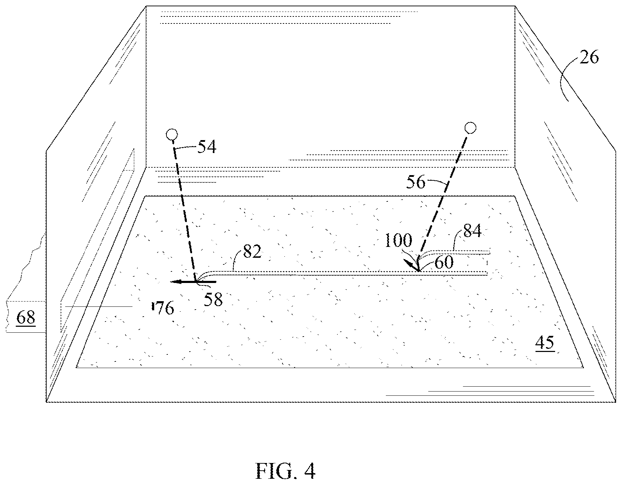

In operation, the interaction of the build beams 54, 56 with the powder 44 causes heating and vaporization of the powder 44. As shown in FIG. 4, this generates first and second "plumes" 82, 84 respectively which originate in the vicinity of the melt pools 58, 60 and travel downstream, entrained in the gas flow 76. In the immediate vicinity of the melt pools 58, 60 the composition of the plumes 82, 84 respectively is mostly vaporized powder. At downstream locations, the vapor can cool and condense so that the plumes 82, 84 comprises a mixture of gas and metallic particles.

It will be understood that, so long as one of the build beams 54, 56 contacts the powder 44 at a location upstream of the other build beam 54, 56 relative to gas flow 76, there is a potential for an intersection of one of the build beams 54, 56 with one of the plumes 82, 84. It will further be understood that the build beams 54, 56 described above typically can be scanned or positioned across the build surface 45 faster than the plumes 82, 84 travel, thus creating the potential for the build beam 54, 56 to intersect its own plume 82, 84.

When one of the build beams 54, 56 intersects a plume 82, 84, the presence of the condensate can have numerous detrimental effects, for example blockage of the build beam 54, 56 and/or reduced beam intensity. These effects can be inconsistent because the condensate is scintillating. Accordingly, it is desirable to conduct the build process in such a manner that neither of the build beams 54, 56 passes through either of the plumes 82, 84. Several techniques for avoiding these intersections are described below.

To enable the avoidance techniques described elsewhere herein, it is essential to quantify the behavior of the plumes 82, 84. In particular, it is desirable to create a "plume map" describing the location and dimensions of each plume 82, 84 in 3-D space for any given time, and the propagation of the plumes 82, 84 over time. This process is described as determining the trajectory of the plumes 82, 84. Several methods will be described for characterizing the plumes 82, 84. For the purposes of convenient description, this will be described using plume 82 as an example with the understanding that the same methods may be used for plume 84 or for any additional plume, where multiple energy beams are used.

One possible method according to the invention for characterizing the plume 82 involves modeling the plume 82. This may be done for example, using a commercially available computational fluid dynamics ("CFD") software package. The inputs to the software include, but are not limited to, the aerodynamic and thermal characteristics of the shielding gas flow 76 and the aerodynamic and thermal characteristics of the plume generation and propagation process. The inputs may take into consideration factors such as: air flow rates, energy beam wavelength, intensity, or focus, consolidated or unconsolidated powdered material composition and physical characteristics, melt pool dimensions and thermal characteristics, the type of fusing process (e.g. heating, melting, or sintering), and the composition of the plume (e.g. gases/and/or metal alloys). The CFD software is then capable of producing as an output the above-mentioned plume map.

Another method according to the invention for characterizing the plume 82 involves sensing the plume 82. Any visualization technique capable of distinguishing the plume 82 from the gas flow 76 may be used for this purpose.

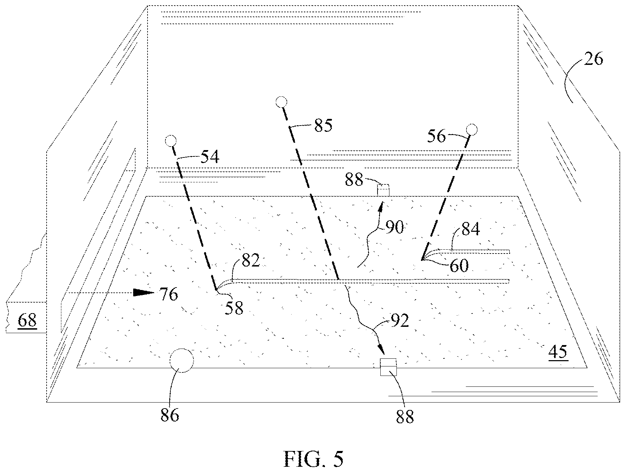

For example, an illumination source may be provided to illuminate the plume 82 in concert with one or more sensors to detect light scattered or reflected from the plume 82. Nonlimiting examples of suitable illumination sources include: a laser operated at a low output wattage (such as the beam generators 24); one or more additional dedicated low-power lasers (shown schematically at 85 in FIG. 5), a supplementary light-emitting diode ("LED"), or a chamber light in an appropriate wavelength (e.g. infrared or visible). Both backscatter and forward scatter sensing techniques may be used, and multiple images from multiple sensors may be combined to generate a 3-D plume map.

In the example shown in FIG. 5, an illumination source 86 (shown schematically) is provided at a fixed location within the housing 26. Sensors 88 are provided within the housing 26 with a clear field of view of the build surface 45. Each sensor 88 is sensitive to forward scattered light 90 or backward scattered light 92. The sensors 88 are of a type and configured such that they can produce a signal representative of the position of the plume 82. For example, they may be imaging sensors, or a plurality of simpler sensors arranged in an X-Y array may be provided in order to provide positional reference. The pattern of signals from the sensors 88 is indicative of the location of the plume 82.

The sensors 88 may be used to generate a plume map in real time as the build process proceeds. Alternatively, the sensors 88 could be used as part of an empirical method of characterizing the plume 82. Initially, a test build would be performed using a nominal set of operating parameters, without any effort to avoid beam-plume interactions. The sensors 88 would be used to create a plume map as described above. In a second iteration, the plume map would be used to implement changes in the build parameters using one or more of the beam-plume avoidance methods described below. The sensors 88 could be used again to determine the effectiveness of the changes. A series of iterations may be performed until the operating parameters result in minimal beam-plume interactions. Once this set of iterations is complete, subsequent builds could be performed in an open loop using the optimized set of operating parameters.

Using the information provided by one or more of the methods described above of characterizing the plume, the machine 10 is controlled in such a way as to prevent undesirable interaction between the build beams 54, 56 and the plumes 82, 84.

For example, one possible method involves controlling the operation of the beam generators 24, with reference to the plume maps described above, so that the build beams 54, 56 are diverted away from or-the plumes 82, 84. Referring to FIG. 4, build beam 54 is shown generating plume 82 and build beam 56 is shown traversing an intended path 100 which would intersect the plume 82. Using this method, the build beam 56 would be steered away from path 100 momentarily at the point of predicted intersection with the plume 82. The build beam 56 could be steered back along the intended path 100 at a subsequent time after the plume 82 has moved away. Alternatively, the build beam 56 could be steered away from its nominal path only when an actual intersection has been detected.

This technique may be implemented using a single beam generator 24 or multiple beam generators 24.

According to the invention, control or modification of the plume trajectory is used to prevent undesirable interaction between the build beams 54, 56 and the plumes 82, 84.

One possible method according to the invention involves varying the magnitude of the gas flow 76, for example by varying the speed of the fan 64. This will cause the plumes 82, 84 to propagate at lower or higher velocities, depending on the speed variation. As a result, this can provide some control over the location of the plumes 82, 84 at a given point in time.

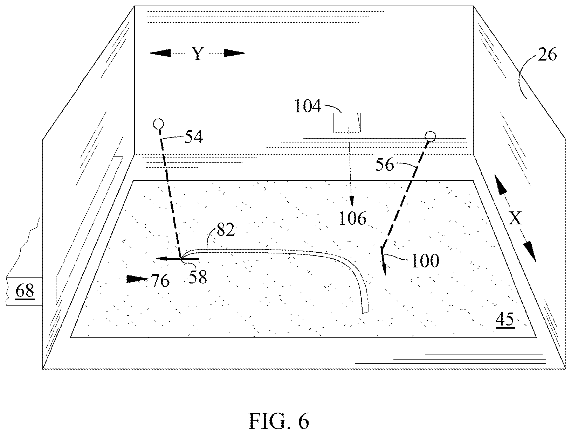

Another method according to the invention involves providing a means for vectoring of the gas flow 76. This may be accomplished, for example by providing turning vanes or similar (not shown) in the inlet duct 68. Alternatively, as shown in FIG. 6, the housing 26 may be provided with one or more additional inlet ducts 104 coupled to the gas flow system 62. This additional inlet duct 104 is aligned perpendicular to the axis of the inlet duct 68, i.e. parallel to the X-direction. Selective operation of the additional inlet duct 104 permits turning of the gas flow 76. Selective operation of the inlet duct 104 may be implemented by way of an independent fan (not shown) or appropriate valves or dampers (not shown) within the gas flow system 62.

In FIG. 6, build beam 54 is shown generating plume 82 and build beam 56 is shown traversing in intended path 100 which would intersect the plume 82. Using this method, additional gas flow (arrow 106) would be introduced through additional inlet duct 104 slightly before the time of predicted intersection with the plume 82, having the effect of turning the plume 82 away from the intended path 100. The build beam 56 would then be free to continue following the intended path 100. Subsequently, the gas flow through additional inlet duct 104 may be terminated.

In a more complex mode of operation, the flow through two or more inlet ducts such as ducts 68 and 104 may be varied to produce a coordinated effect, e.g. to produce two independently variable orthogonal flow components, resulting in an arbitrary desired flow velocity and/or direction of the plume 82.

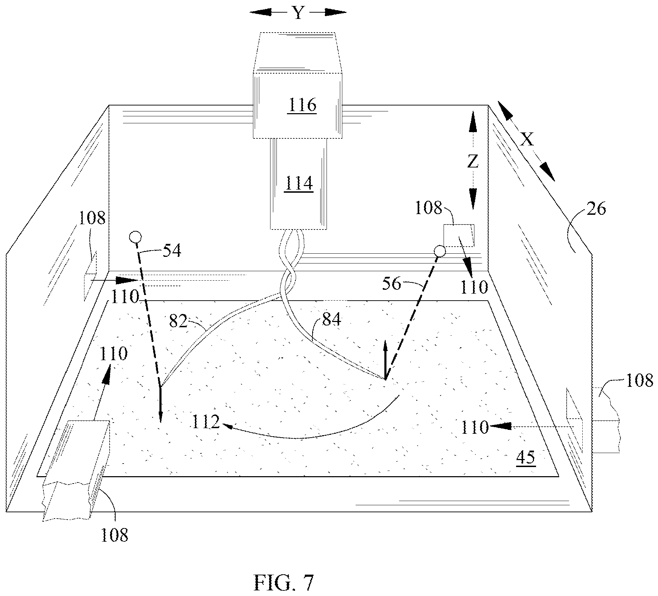

Another possible method involves establishing a continuous predictable vortex in the gas flow. As shown in FIG. 7, the housing 26 may be provided with two or more inlet ducts 108 arranged to produce rotating flow. In this example, one inlet duct 108 is provided in each of the corners of the housing 26, and the flow direction of each inlet duct 108 is oriented at a 90° angle to the closest adjacent inlet duct 108, creating gas flows 110.

Operation of the inlet ducts 108 will result in a large circulation pattern or vortex 112 in the gas flow which in turn will create a rotating trajectory of the plumes 82 and 84. The plumes 82 and 84 will be constantly moving over the build surface 45, in effect "clearing" any given location on the build surface 45 at regular intervals. The build beams 54, 46 can be steered to move over the build surface 45 into the cleared areas, "following" the movement of the vortex pattern.

In addition to or as an alternative to the use of inlet ducts 108 to produce vortex 112, a suction source may be provided to discourage the plumes 82, 84 away from the build surface 45 and the build beams 54, 56. In the example illustrated in FIG. 7, a suction duct 114 is positioned above the build surface 45 in an "overhead" position. The suction duct 114 is coupled to a suction source 116 such as an additional fan configured to produce an outward flow relative to the housing 26.

As shown in FIG. 7, the suction flow tends to move the plumes 82, 84 upwards or in the plus-Z direction away from the build surface 45. When combined with the vortex flow described above, the plumes 82, 84 tend to flow in a spiral or helix towards the suction duct 114.

Optionally, means such as actuators (not shown) may be provided to move the suction duct 114 in the X and Y directions. Movement of the suction duct 114 may be coordinated with the plume trajectory information described above so as to move the suction duct 114 to the most effective location during a build process.

The operation of the apparatus described above including the machine 10 and gas flow apparatus 62 may be controlled, for example, by software running on one or more processors embodied in one or more devices such as a programmable logic controller ("PLC") or a microcomputer (not shown). Such processors may be coupled to the sensors and operating components, for example, through wired or wireless connections. The same processor or processors may be used to retrieve and analyze sensor data, for statistical analysis, and for feedback control.

The method described herein has several advantages over the prior art. In particular, it enables the use of multiple energy beams or rapidly-scanned energy beams in order to speed up an additive manufacturing process.

It will improve part quality by maintaining uniform energy beam density and focus.

## Claims

1. A method of controlling a powder bed based additive manufacturing process in which one or more energy beams (54, 56) are used to selectively fuse a powder (44) contained in a housing (26) having a gas flow (76, 106, 110) therein in order to form a workpiece (25), in the presence of one or more plumes (82, 84) generated by interaction of the one or more energy beams (54, 56) with the powder (44), the method comprising controlling a trajectory of the one or more plumes (82, 84) by varying the magnitude or the direction of the gas flow (76, 106, 110), so as to prevent the one or more energy beams (54, 56) from intersecting the one or more plumes (82, 84),
wherein the method comprises: determining the trajectory of the one or more plumes (82, 84) by sensing or by modeling to quantify a behavior of the one or more plumes (82, 84).

2. The method of claim 1 wherein a plume trajectory is modified by varying a magnitude of the gas flow (76, 106, 110).

3. The method of claim 1 wherein a plume trajectory is modified by varying a direction of the gas flow (76, 106, 110).

4. The method of claim 3 wherein the gas flow (76, 106, 110) is introduced into the housing (26) through two or more separate inlet ducts (68, 104, 108), each of the inlet ducts (68, 104, 108) discharging a gas flow (76, 106, 110) in a different direction.

5. The method of claim 1 further comprising introducing the gas flow (76, 106, 110) into the housing (26) through two or more separate inlet ducts (68, 104, 108) so as to generate a vortex in the gas flow (76, 106, 110).

6. The method of claim 1 further comprising using a suction source (116) in fluid communication with the housing (26) to draw the one or more plumes (82, 84) away from the powder (44).

7. The method of claim 1 further comprising steering the one or more energy beams (54, 56) so as to avoid intersecting the one or more plumes (82, 84).

8. The method of claim 1 wherein an intersection of the one or more energy beams (54, 56) with the one or more plumes (82, 84) is predicted prior to the intersection occurring.

9. The method of claim 1 wherein an intersection of the one or more energy beams (54, 56) with the one or more plumes (82, 84) is not predicted prior to the intersection occurring.

10. The method of claim 1 wherein an electronic controller with access to observed or predicted plume trajectories applies this information to determine when to change a trajectory of the one or more plumes (82, 84).

11. The method of claim 1 wherein a path (100) is selected for each of the one or more plumes (82, 84) prior to beginning the additive manufacturing process.

## Patentansprüche

1. Verfahren zum Steuern eines Pulverbett-basierten additiven Herstellungsprozesses, bei dem ein oder mehrere Energiestrahlen (54, 56) verwendet werden, um ein Pulver (44), das in einem Gehäuse (26) mit einem Gasstrom (76, 106, 110) darin enthalten ist, selektiv zu schmelzen, um ein Werkstück (25) zu bilden, in Gegenwart einer oder mehrerer Abgaswolken (82, 84), die durch Wechselwirkung des einen oder der mehreren Energiestrahlen (54, 56) mit dem Pulver (44) erzeugt werden, wobei das Verfahren das Steuern einer Bewegungsbahn der einen oder mehrerer der Abgaswolken durch Variieren der Größe oder der Richtung des Gasstroms (76, 106, 110) umfasst, um zu verhindern, dass der eine oder die mehreren Energiestrahlen (54, 56) die eine oder die mehreren Abgaswolken (82, 84) überschneiden,
wobei das Verfahren umfasst: Bestimmen der Bewegungsbahn der einen oder mehreren Abgaswolken (82, 84) durch Erfassen oder durch Modellieren, um ein Verhalten der einen oder mehreren Abgaswolken (82, 84) zu quantifizieren.

2. Verfahren gemäß Anspruch 1, wobei eine Abgaswolkenbewegungsbahn durch Variieren einer Größe des Gasstroms (76, 106, 110) modifiziert wird.

3. Verfahren gemäß Anspruch 1, wobei eine Abgaswolkenbewegungsbahn durch Variieren einer Richtung des Gasstroms (76, 106, 110) modifiziert wird.

4. Verfahren gemäß Anspruch 3, wobei der Gasstrom (76, 106, 110) durch zwei oder mehr getrennte Einlasskanäle (68, 104, 108) in das Gehäuse (26) eingeleitet wird, wobei jeder der Einlasskanäle (68, 104, 108) einen Gasstrom (76, 106, 110) in eine andere Richtung abgibt.

5. Verfahren gemäß Anspruch 1, ferner umfassend das Einleiten des Gasstroms (76, 106, 110) in das Gehäuse (26) durch zwei oder mehr getrennte Einlasskanäle (64, 104, 108), um einen Wirbel in dem Gasstrom (76, 106, 110) zu erzeugen.

6. Verfahren gemäß Anspruch 1, ferner umfassend das Verwenden einer Saugquelle (116) in Fluidverbindung mit dem Gehäuse (26), um die eine oder mehrere der Abgaswolken (82, 84) von dem Pulver (44) wegzuziehen.

7. Verfahren gemäß Anspruch 1, ferner umfassend das Lenken eines oder mehrerer der Energiestrahlen (54, 46), um ein Überschneiden der einen oder mehreren Abgaswolken (82, 84) zu vermeiden.

8. Verfahren gemäß Anspruch 1, wobei ein Schnittpunkt eines oder mehrerer der Energiestrahlen (54, 56) mit einem oder mehreren der Abgaswolken (82, 84) vorhergesagt wird, bevor der Schnittpunkt auftritt.

9. Verfahren gemäß Anspruch 1, wobei ein Schnittpunkt des einen oder mehreren Energiestrahls (54, 56) mit einer oder mehreren der Abgaswolken (82, 84) nicht vorhergesagt wird, bevor der Schnittpunkt auftritt.

10. Verfahren gemäß Anspruch 1, wobei eine elektronische Steuerung mit Zugriff auf beobachtete oder vorhergesagte Abgaswolkenbewegungsbahn diese Informationen anwendet, um zu bestimmen, wann eine Bewegungsbahn einer oder mehrerer der Abgaswolken (82, 84) geändert werden soll.

11. Verfahren gemäß Anspruch 1, wobei ein Pfad (100) für jede der einen oder mehreren Abgaswolken (82, 84) vor Beginn des additiven Herstellungsprozesses ausgewählt wird.

## Revendications

1. Procédé de contrôle d'un processus de fabrication additive à base de lit de poudre, dans lequel un ou plusieurs faisceaux d'énergie (54, 56) sont utilisés pour faire fusionner de manière sélective une poudre (44) contenue dans un boîtier (26) ayant un flux de gaz (76, 106, 110) entrant pour former une pièce (25), en présence d'un ou de plusieurs panaches (82, 84) produits par interaction d'un ou de plusieurs faisceaux d'énergie (54, 56) avec la poudre (44), le procédé comprenant le contrôle d'une trajectoire du ou des panaches (82, 84) en variant l'amplitude ou la direction du flux de gaz (76, 106, 110) de manière à prévenir l'entrecroisement du ou des panaches (82, 84) par le ou les faisceaux d'énergie (54, 56),
dans lequel le procédé comprend : la détermination de la trajectoire du ou des panaches (82, 84) par détection ou par modélisation pour quantifier un comportement du ou des panaches (82, 84).

2. Procédé selon la revendication 1, dans lequel une trajectoire de panache est modifiée en variant une amplitude du flux de gaz (76, 106, 110).

3. Procédé selon la revendication 1, dans lequel une trajectoire de panache est modifiée en variant une direction du flux de gaz (76, 106, 110).

4. Procédé selon la revendication 3, dans lequel le flux de gaz (76, 106, 110) est introduit dans le boîtier (26) par deux conduits d'entrée (68, 104, 108) séparés ou plus, chaque conduit d'entrée (68, 104, 108) évacuant un flux de gaz (76, 106, 110) dans une direction différente.

5. Procédé selon la revendication 1, comprenant en outre l'introduction du flux de gaz (76, 106, 110) dans le boîtier (26) par deux conduits d'entrée (68, 104, 108) séparés ou plus de manière à produire un tourbillon dans le flux de gaz (76, 106, 110).

6. Procédé selon la revendication 1, comprenant en outre l'utilisation d'une source d'aspiration (116) en communication fluidique avec le boîtier (26) pour éloigner le ou les panaches (82, 84) de la poudre (44).

7. Procédé selon la revendication 1, comprenant en outre la direction du ou des faisceaux d'énergie (54, 56) pour éviter l'entrecroisement du ou des panaches (82, 84).

8. Procédé selon la revendication 1, dans lequel un entrecroisement du ou des faisceaux d'énergie (54, 56) avec le ou les panaches (82, 84) est prédit avant la survenue de l'entrecroisement.

9. Procédé selon la revendication 1, dans lequel un entrecroisement du ou des faisceaux d'énergie (54, 56) avec le ou les panaches (82, 84) n'est pas prédit avant la survenue de l'entrecroisement.

10. Procédé selon la revendication 1, dans lequel un contrôleur électronique ayant accès aux trajectoires de panache observées ou prédites applique cette information pour déterminer le moment pour changer une trajectoire du ou des panaches (82, 84).

11. Procédé selon la revendication 1, dans lequel un trajet (100) est choisi pour chacun du ou des panaches (82, 84) avant le début du processus de fabrication additive.
